# EUROPÄISCHE PATENTSCHRIFT

(11) **EP 1 440 227 B1**
(45) Veröffentlichungstag und Bekanntmachung des Hinweises auf die Patenterteilung: **27.12.2006**
(21) Anmeldenummer: 02785240.9
(22) Anmeldetag: 18.10.2002
(51) Int. Cl.: F01N 3/022, B01D 39/20, B01D 46/10, B01D 46/24

(54) **FILTERVERBUND UND VERFAHREN ZU SEINER HERSTELLUNG**
FILTER COMPOSITE AND METHOD FOR THE PRODUCTION THEREOF
FILTRE COMPOSITE ET PROCEDE PERMETTANT DE LE PRODUIRE

(30) Priorität: 29.10.2001 DE 10153284
(43) Veröffentlichungstag der Anmeldung: 28.07.2004
(73) Patentinhaber: Emitec Gesellschaft für Emissionstechnologie mbH, 53797 Lohmar (DE)
(72) Erfinder: BRÜCK, Rolf, 51429 Bergisch Gladbach (DE)
(74) Vertreter: Kahlhöfer, Hermann
(86) Internationale Anmeldenummer: PCT/EP2002/011683
(87) Internationale Veröffentlichungsnummer: WO 2003/038248

(56) Entgegenhaltungen:
- WO-A-91/01178
- DD-A- 239 125
- DE-A- 19 704 147
- DE-C- 10 020 170
- US-A- 4 600 420
- US-A- 5 298 046

## Beschreibung

Die Erfindung bezieht sich auf einen Filterverbund, der für ein Fluid durchströmbar ist bzw. einen Filterkörper zur Reinigung eines Abgasstromes einer Verbrennungskraftmaschine, welcher mit dem erfindungsgemäßen Filterverbund aufgebaut ist. Weiterhin beschreibt die Erfindung ein Verfahren zur Herstellung eines Filterverbundes.

Betrachtet man die Neuzulassungen in Deutschland, so stellt man fest, dass im Jahre 2000 rund ein Drittel aller neu zugelassenen Fahrzeuge Dieselmotoren aufweisen. Dabei ist dieser Anteil traditionsgemäß deutlich höher als beispielsweise in den Ländern Frankreich und Österreich. Dieses gesteigerte Interesse an Diesel-Kraftfahrzeugen hat beispielsweise seinen Ursprung in dem relativ geringen Kraftstoffverbrauch, den derzeit relativ niedrigen Diesel-Kraftstoff-Preisen, aber auch in den verbesserten Fahreigenschaften derartiger Fahrzeuge. Auch unter umweltspezifischen Gesichtspunkten ist ein Dieselfahrzeug sehr reizvoll, da dieses gegenüber Benzin-angetriebenen Fahrzeugen eine deutlich reduzierte CO₂-Emission aufweist. Allerdings muss auch festgestellt werden, dass der Anteil der bei der Verbrennung erzeugten Rußpartikel deutlich über dem von Benzin-angetriebenen Fahrzeugen liegt.

Betrachtet man nun die Reinigung von Abgasen, insbesondere von Dieselmotoren, so lassen sich Kohlenwasserstoffe (HC) wie auch Kohlenmonoxide (CO) im Abgas in bekannter Weise oxidieren, indem diese beispielsweise mit einer katalytisch aktiven Oberfläche in Kontakt gebracht werden. Die Reduktion von Stickoxiden (NOₓ) unter sauerstoffreichen Bedingungen ist allerdings schwieriger. Ein Drei-Wege-Katalysator, wie er beispielsweise bei Otto-Motoren eingesetzt wird, bringt nicht die gewünschten Effekte. Aus diesem Grunde wurde das Verfahren der Selektiven Katalytischen Reduktion (SCR: "selective catalytic reduction") entwickelt. Weiterhin wurden NOₓ-Adsorber auf ihren Einsatz im Hinblick auf die Stickoxid-Reduktion erprobt.

Die Diskussion, ob Partikel oder langkettige Kohlenwasserstoffe einen negativen Effekt auf die menschliche Gesundheit haben, wird nun schon über einen sehr langen Zeitraum betrieben, ohne bislang eine endgültige Aussage getroffen zu haben. Ungeachtet davon ist das Bestreben erkennbar, dass derartige Emissionen über einen gewissen Toleranzbereich hinaus nicht an die Umgebung abgegeben werden sollen. Insofern stellt sich die Frage, welche Filtereffizienz tatsächlich notwendig ist, um die bislang bekannten gesetzlichen Richtlinien auch für die Zukunft einhalten zu können. Betrachtet man das derzeitige Abgasverhalten von im Verkehr befindlichen Fahrzeugen in der Bundesrepublik Deutschland, so ist festzustellen, dass die meisten der 1999 nach EU III zertifizierten Pkws auch die Anforderungen gemäß EU IV einhalten können, wenn diese mit einem Filter ausgestattet werden, welcher eine Effektivität von wenigstens 30 bis 40 % aufweist.

Zur Reduktion von Partikel-Emissionen sind Partikelfallen bekannt, welche aus einem keramischen Substrat aufgebaut sind. Diese weisen Kanäle auf, so dass das zu reinigende Abgas in die Partikelfalle einströmen kann. Die benachbarten Kanäle sind abwechselnd verschlossen, so dass das Abgas auf der Eintrittsseite in den Kanal eintritt, durch die keramische Wand hindurchtritt und durch den benachbarten Kanal auf der Austrittsseite wieder entweicht. Derartige Filter erreichen eine Effektivität von ca. 95 % über die gesamte Breite der auftretenden Partikelgrößen.

Zusätzlich zu chemischen Wechselwirkungen mit Additiven und speziellen Beschichtungen stellt die sichere Regeneration des Filters im Abgassystem eines Automobils immer noch ein Problem dar. Die Regeneration der Partikelfalle ist erforderlich, da die zunehmende Ansammlung von Partikelteilchen in der zu durchströmenden Kanalwand einen stetig steigenden Druckverlust zur Folge hat, der negative Auswirkungen auf die Motorleistung hat. Die Regeneration umfasst im wesentlichen das kurzzeitige Aufheizen der Partikelfalle bzw. der darin angesammelten Partikel, so dass die Rußpartikel in gasförmige Bestandteile umgesetzt werden. Diese hohe thermische Beanspruchung der Partikelfalle hat allerdings negative Auswirkungen auf die Lebensdauer.

Zur Vermeidung dieser diskontinuierlichen und thermisch sehr verschleißfördernden Regeneration wurde ein System zur kontinuierlichen Regeneration von Filtern entwickelt (CRT: "continuous regeneration trap"). In einem solchen System werden die Partikel bei Temperaturen bereits oberhalb von 200°C mittels Oxidation mit NO₂ verbrannt. Das hierzu erforderliche NO₂ wird häufig durch einen Oxidationskatalysator erzeugt, der stromaufwärts vor der Partikelfalle angeordnet ist. Hierbei stellt sich jedoch gerade im Hinblick auf die Anwendung bei Kraftfahrzeugen mit Diesel-Kraftstoff das Problem, dass nur ein unzureichender Anteil von Stickstoffinonoxid (NO) im Abgas existiert, welcher zu dem gewünschten Stickstoffdioxid (NO₂) umgewandelt werden kann. Infolgedessen kann bislang nicht sichergestellt werden, dass eine kontinuierliche Regeneration der Partikelfalle im Abgassystem stattfindet.

Es ist weiter zu berücksichtigen, dass neben nichtumwandelbaren Partikeln auch Öl oder zusätzliche Rückstände von Additiven in einer Partikelfalle angelagert werden, die nicht ohne weiteres regeneriert werden können. Aus diesem Grund müssen bekannte Filter in regelmäßigen Abständen ausgetauscht und/oder gewaschen werden. Plattenartig aufgebaute Filtersysteme versuchen dieses Problem dadurch zu lösen, dass eine vibrations-ähnliche Anregung ermöglicht wird, welche zum Herauslösen dieser Bestandteile aus dem Filter führt. Allerdings gelangt somit der nicht regenerierbare Anteil der Partikel zum Teil ohne weitere Behandlung direkt in die Umgebung.

Zusätzlich zu einer minimalen Reaktionstemperatur und einer spezifischen Verweildauer muss zur kontinuierlichen Regeneration von Partikeln mit NO₂ ausreichend Stickoxid zur Verfügung gestellt werden. Tests bezüglich der dynamischen Emission von Stickstoffmonoxid (NO) und Partikeln haben klar hervorgebracht, dass die Partikel gerade dann emittiert werden, wenn kein oder nur sehr wenig Stickstoffmonoxid im Abgas vorhanden ist und umgekehrt. Daraus folgt, dass ein Filter mit realer kontinuierlicher Regeneration im wesentlichen als Kompensator oder Speicher fungieren muss, so dass gewährleistet ist, dass die beiden Reaktionspartner zu einem gegebenen Zeitpunkt in den benötigten Mengen im Filter verweilen. Weiterhin ist der Filter möglichst nahe an der Verbrennungskraftmaschine anzuordnen, um bereits unmittelbar nach dem Kaltstart möglichst hohe Temperaturen annehmen zu können. Zur Bereitstellung des erforderlichen Stickstoffdioxides ist dem Filter ein Oxidationskatalysator vorzuschalten, welcher Kohlenmonoxid (CO) und Kohlenwasserstoffe (HC) umsetzt und insbesondere auch Stickstoffmonoxid (NO) in Stickstoffdioxid (NO₂) konvertiert. Bei einer motornahen Anordnung dieses Systems aus Oxidationskatalysator und Filter ist insbesondere die Position vor einem Turbolader geeignet, der bei Diesel-Kraftfahrzeugen häufig zur Erhöhung des Ladedrucks in der Brennkammer verwendet wird.

Betrachtet man diese grundsätzlichen Überlegungen, so stellt sich für den tatsächlichen Einsatz im Automobilbau die Frage, wie ein derartiger Filter aufgebaut ist, der in einer solchen Position und in Anwesenheit extrem hoher thermischer und dynamischer Belastungen einen zufrieden stellenden Filterwirkungsgrad aufweist. Dabei sind insbesondere die räumlichen Gegebenheiten zu berücksichtigen, die ein neues Konzept für Filter bedingen. Während bei den klassischen Filtern, welche im Unterboden eines Kfzs angeordnet wurden, ein möglichst großes Volumen im Vordergrund stand, um eine hohe Verweilzeit der noch nicht umgesetzten Partikel im Filter und somit eine hohe Effizienz zu gewährleisten, besteht bei einer motornahen Anordnung nicht genügend Platz bzw. Raum zur Verfügung.

Hierzu wurde ein neues Konzept entwickelt, welches im wesentlichen unter dem Begriff "offenes Filtersystem" bekannt geworden ist. Diese offenen Filtersysteme zeichnen sich dadurch aus, dass auf ein konstruktives, wechselseitiges Verschließen der Filterkanäle verzichtet werden kann. Dabei wird vorgesehen, dass die Kanalwände zumindest teilweise aus porösem oder hochporösem Material aufgebaut sind und dass die Strömungskanäle des offenen Filters Umlenk- oder Leitstrukturen aufweist. Diese Einbauten bewirken, dass die Strömung bzw. die darin enthaltenen Partikel hin zu den Bereichen aus porösem oder hochporöserem Material gelenkt werden. Dabei hat sich überraschenderweise herausgestellt, dass die Partikel durch Interception und/oder Impaktion an und/oder in der porösen Kanalwand haften bleiben. Für das Zusammenkommen dieser Wirkung sind die Druckunterschiede im Strömungsprofil des strömenden Abgases von Bedeutung. Durch die Umlenkung können zusätzlich lokale Unterdruck- oder Überdruckverhältnisse entstehen, die zu einem Filtrationseffekt durch die poröse Wand hindurch führen, da die obengenannten Druckunterschiede ausgeglichen werden müssen.

Die Partikelfalle ist dabei im Gegensatz zu den bekannten geschlossenen Sieb- oder Filtersystemen offen, weil keine Strömungssackgassen vorgesehen sind. Diese Eigenschaft kann somit auch zur Charakterisierung derartiger Partikelfilter dienen, so dass beispielsweise der Parameter "Strömungsfreiheit" zur Beschreibung geeignet ist. So bedeutet eine "Strömungsfreiheit" von 20 %, dass in einer Querschnittsbetrachtung ca. 20 % der Fläche durchschaubar sind. Bei einem Partikelfilter mit einer Kanaldichte von ca. 600 cpsi ("cells per square inch") mit einem hydraulischen Durchmesser von 0,8 mm entspräche diese Strömungsfreiheit einer Fläche von über 0,1 mm².

Auch zur Realisierung eines solchen offenen Filtersystems ist es nunmehr Aufgabe der vorliegenden Erfindung, ein Filtermaterial anzugeben, welches gerade für den Einsatz im Rahmen der kontinuierlichen Regeneration und den daraus resultierenden Anforderungen besonders gut geeignet ist. Insofern muss das Filtersystem den hohen thermischen und dynamischen Belastungen im Abgassystem eines Pkws standhalten, welche ihren Ursprung in dem pulsartigen Ausstoß von sehr heißem Abgas haben. Weiterhin soll ein entsprechender Filterkörper angegeben werden, der zur signifikanten Reduktion von Partikeln im Abgassystem geeignet ist. Zusätzlich soll ein Verfahren zur Herstellung des Filtermaterials angegeben werden.

Diese Aufgaben werden gelöst durch einen Filterverbund mit den Merkmalen des Patentanspruchs 1, einem Filterkörper zur Reinigung eines Abgasstromes einer Verbrennungskraftmaschine mit den Merkmalen des Patentanspruchs 12 sowie einem Verfahren zur Herstellung eines Filterverbundes gemäß den Merkmalen des Patentanspruchs 14. Weitere vorteilhafte Ausgestaltungen sind in den jeweils abhängigen Patentansprüchen beschrieben, wobei die jeweiligen Merkmale einzeln oder in jeder beliebigen, sinnvollen Kombination auftreten kann.

Der erfindungsgemäße Filterverbund ist für ein Fluid durchströmbar und umfasst mindestens eine Decklage aus zumindest teilweise porösem oder hochporösem Material und mindestens eine Faserlage aus einem Fasergewebe. Die Decklage weist zudem mindestens einen Randbereich auf. Der Filterverbund zeichnet sich dadurch aus, dass die mindestens eine Decklage eine die Faserlage umschließende Hülle bildet, so dass die Faserlage im Inneren der mindestens einen Decklage unverlierbar angeordnet ist. Unter einer Hülle ist in diesem Zusammenhang eine Anordnung der mindestens einen Decklage zu verstehen, bei der sich die mindestens eine Decklage zumindest teilweise auch über die Begrenzung der Faserlage hinaus erstreckt, insbesondere diese vollständig umschließt. Insofern ist zumindest teilweise eine Hülle über den gesamten Umfang der Faserlage ausgebildet. Dieses Umgreifen der Decklage um die Begrenzung der Faserlage hat demnach zur Folge, dass eine Relativbewegung der Faserlage gegenüber der mindestens einen Decklage in zumindest einer Richtung formschlüssig behindert wird.

Die Ausbildung eines derartigen Filterverbundes vereint mehrere Vorteile, die insbesondere im Hinblick auf die motornahe Anordnung eines solchen Filterverbundes von Bedeutung sind. Die mindestens eine Decklage stellt eine Art Schutzhülle dar, welche die innenliegende Faserlage vor den auftretenden Druckschlägen bzw. Temperaturspitzen schützt. Die Faserlage stellt gegenüber der Decklage einen deutlich lockereren Materialverbund aus Fasern dar. Hierzu sei angemerkt, dass mit dem Begriff "Fasergewebe" alle vorstellbaren Anordnungen von Fasern in Verbünden, Gestricken od. dgl. umfasst sind. Auch hinsichtlich des Materials sind hier eine Vielzahl von Alternativen möglich, wie beispielsweise keramische Fasern, Metallfasern, Sintermaterialien od. dgl.. Die Faserlage kann dabei eine sehr hohe Porosität aufweisen, da diese wegen der Anwesenheit einer sie schützenden Decklage nicht vordergründig auf Festigkeit ausgelegt werden muss. Insofern können besonders große Freiräume, Poren od. dgl. in der Faserlage realisiert werden. Dies wird insbesondere dadurch unterstützt, dass die mindestens eine Decklage band- oder folienähnlich aufgebaut ist, also eine relativ große Anlagefläche bietet. Folglich sind hier deutlich lockerer gepackte Fasermaterialien einsetzbar, als beispielsweise bei bekannten Drahtnetzen, die zur Wahrung der Formstabilität der Filterlagen bislang eingesetzt wurden.

Seither wurden derartige Sandwich-Strukturen so ausgebildet, dass jeweils eine Stützstruktur auf beiden Seiten des Filtermaterials angeordnet ist (insbesondere Drahtgeflechte), und dieses Sandwich anschließend in die gewünschte Form gebogen bzw. umgeformt wurde. Dabei wurden diese Sandwich-Strukturen so in dem Abgasstrom angeordnet, dass die Begrenzung (bzw. Stirnfläche) des Filtermaterials ungeschützt dem pulsierenden Abgasstrom ausgesetzt waren. Dies führte zu Auflösungserscheinungen gerade in diesen Stirnbereichen. Um sicherzustellen, dass das Fasermaterial über einen längeren Zeitraum zwischen den Drahtgeweben fixiert ist, musste diese Sandwich-Struktur unter hohem Druck zusammengepresst werden, was aufgrund der daraus resultierenden, sehr kleinen Poren bzw. Freiräumen zur Ansammlung von Partikeln spürbare Einbußen betreffend die Effektivität des Filtermaterials zur Folge hatte. Dies wird bei dem erfindungsgemäßen Filterverbund auf einfache Weise vermieden, da ein Umgreifen der mindestens einen Decklage um die Begrenzung der Faserlage herum die unverlierbare Anordnung der Faserlage im Inneren direkt zur Folge hat.

Gemäß einer weiteren Ausgestaltung ist die die Faserlage schützende Hülle aus einer Decklage gebildet, wobei diese mindestens einen Randbereich und einen gegenüberliegenden Umformungsbereich hat, und die Decklage in dem mindestens einen Randbereich mit sich selbst fügetechnisch verbunden ist. Folglich weist die Decklage Dimensionen auf, die es erlauben, dass die Decklage einmal um die Faserlage herum angeordnet werden kann, wobei sie nahe einer Begrenzung der Faserlage umgeformt (gebogen, gefalzt od. dgl.) wird und auf der gegenüberliegenden Seite in einem Randbereich mit sich selbst beispielsweise verlötet oder verschweißt wird. Die Anordnung eines solchen Filterverbundes im Abgasstrom einer Verbrennungskraftmaschine ist dabei bevorzugt dergestalt, dass das auf den Filterverbund zuströmende Abgas entweder auf den Randbereich mit der fügetechnischen Verbindung oder den Umformungsbereich auftrifft. Folglich ist ein Versatz bzw. eine Relativbewegung der Faserlage gegenüber der Decklage in Strömungsrichtung des Abgases gesehen nicht möglich, da hier eine formschlüssig Barriere gebildet ist. In eine Richtung senkrecht dazu kann der Filterverbund auch ohne Umgreifen auskommen, da hier vergleichsweise geringe Kräfte wirken. Vielmehr gewährleistet dies beispielsweise die Kompensation des unterschiedlichen thermischen Ausdehnungsverhaltens von Decklage und Faserlage.

Alternativ dazu wird auch vorgeschlagen, dass die Hülle mit mindestens zwei Decklagen gebildet ist, wobei die Decklagen miteinander in mindestens einem Randbereich fügetechnisch verbunden sind, und die Faserlage zwischen diesen miteinander verbundenen Decklagen unverlierbar angeordnet ist. Hier ist demnach eine Sandwich-Struktur beschrieben, bei der die Faserlage zwischen zumindest zwei Decklagen angeordnet ist. Die Hülle wird nun dadurch generiert, dass die außen angeordneten Decklagen jeweils die Faserlage überlappende Randbereiche aufweisen, die miteinander fügetechnisch verbunden werden (verlötet, verschweißt, gesintert, verklebt). Diese Randbereiche liegen dabei jeweils nahe zweier gegenüberliegender Kanten der Decklage. Auch wenn es in diesem Zusammenhang bevorzugt ist, den Randbereich mit der fügetechnischen Verbindung im wesentlichen außerhalb des Bereiches mit der Faserlage anzuordnen, kann es unter Umständen auch sinnvoll sein, eine der beiden Decklagen verlängert auszubilden, so dass diese um eine Begrenzung der Faserlage herumgreift und im Bereich der Faserlage mit der weiteren Decklage verbunden wird. Die Bildung einer Schutzhülle in dieser Weise trägt ebenfalls dazu bei, dass die Faserlage unverlierbar im Inneren angeordnet ist.

Gemäß einer weiteren Ausgestaltung weist die mindestens eine Decklage in mindestens einem Randbereich eine reduzierte Porosität gegenüber dem übrigen Bereich auf, insbesondere hat diese dort keine Porosität. Dies bedeutet, dass die Decklage zumindest zwei unterschiedliche Durchlässigkeiten für ein Abgas aufweist. Während die Decklage gerade im Kontaktbereich mit der Faserlager eine relativ hohe Durchlässigkeit oder Porosität aufgrund von Bohrungen, Löchern, Öffnungen, Durchlässen od. dgl. hat, ist sie im Randbereich bevorzugt aus einem für ein Fluid im wesentlichen undurchdringbarem Material. Dies gilt insbesondere für das zur Ausbildung der fügetechnischen Verbindung verwendete Zusatzmaterial, insbesondere Lot oder Schweißwerkstoff. So ist eine dauerhafte Anbindung der miteinander zu verbindenden Decklagen auch bei einer hoch korrosiven Umgebung gewährleistet, wie sie in einem Abgassystem vorliegt.

Gemäß der Erfindung ist die mindestens eine Decklage eine Metallfolie mit einer Dicke kleiner 0,04 mm, insbesondere kleiner 0,03 mm oder sogar kleiner 0,02 mm. Die Ausführung der Decklage aus einer Metallfolie hat besondere Vorteile. So ist beispielsweise eine schnelle Wärmeleitung von der mit dem Abgas in Kontakt stehenden Oberfläche der Decklage hin zum Fasermaterial möglich, so dass auch hier eine schnelle Regeneration (beispielsweise nach dem Starten der Verbrennungskraftmaschine) von eingefangenen und/oder eingelagerten Partikeln möglich ist. Weiterhin wird durch die vorgeschlagene Dicke gewährleistet, dass die Metallfolie nur eine sehr geringe oberflächenspezifische Wärmekapazität hat, so dass auch hier das Anspringverhalten bzw. das schnelle Erreichen der erforderlichen Minimaltemperatur zur Regenerierung von Rußpartikeln unterstützt wird. Zudem kann im Hinblick auf die spezielle Auswahl eines Materials für eine derartige Metallfolie auf Kenntnisse zurückgegriffen werden, welche im Rahmen der Entwicklung von motornah angeordneten metallischen Wabenkörpern als Katalysator-Trägerkörper bereits gewonnen wurden.

Gemäß einer vorteilhaften Ausgestaltung hat der Filterverbund eine mittlere Porosität, die größer als 70 % beträgt, insbesondere sogar größer 90 % ist. Die mittlere Porosität bezieht sich dabei im wesentlichen auf den tatsächlich porösen Bereich, also ohne Randbereiche mit einer reduzierten Porosität. Naturgemäß hat die Faserlage häufig eine deutlich über 70 % oder 90 % liegende Porosität, so dass eine gewisse Reduzierung aufgrund der die Faserlage begrenzende Decklage herbeigeführt wird. Die Porosität der Decklage wird beispielsweise durch die Größe und/oder Anzahl der Durchlässe, Öffnungen od. dgl. definiert. So ist es beispielsweise denkbar, dass die Decklage mit relativ großen Öffnungen (z. B. im Bereich von 2 bis 6 mm Durchmesser) versehen sind, wobei eine relativ geringe Anzahl pro Einheitsfläche vorgesehen ist. Spielen beispielsweise Druckunterschiede über den Filterverbund nur eine untergeordnete Rolle, so ist auch eine deutlich kleinere Ausgestaltung (deutlich kleiner 1 mm) von derartigen Öffnungen in großer Anzahl pro Einheitsfläche möglich. Die jeweilige Gestaltungsform, welche zu der gewünschten Porosität führt, hängt von einer Vielzahl von Parametern ab, wobei hier beispielhaft die Zusammensetzung des Abgases (Partikelgröße, Druckschwankungen etc.), das verwendete Fasermaterial und/oder die Festigkeitseigenschaften der Decklage genannt seien.

Gemäß noch einer weiteren Ausgestaltung erstreckt sich der mindestens eine Randbereich von einer Kante der Decklage über eine Randbreite hin, die zwischen 3 mm und 15 mm beträgt, wobei der Randbereich vorzugsweise zumindest an zwei gegenüberliegenden Kanten angeordnet ist. Diese Randbreite gewährleistet eine dauerhafte Anbindung der benachbarten Decklagen. Der angegebene Bereich ist insbesondere auf bekannte Lötverfahren oder beispielsweise das Rollnahtschweißen abgestimmt. Hierzu sei auch angemerkt, dass eine vollständige Ummantelung bzw. Einhüllung des Fasermaterials möglich ist, wobei eine komplett umlaufende Lötverbindung bzw. Schweißnaht entlang den Kanten der Decklagen vorgenommen wird.

Wie bereits oben erwähnt, ist es besonders vorteilhaft, dass die fügetechnische Verbindung mittels eines Lotmittels durchgeführt ist. Lotmittel hat sich bereits bei der Herstellung von Katalysator-Trägerkörpern aus Metallfolien zur Ausbildung von besonders korrosions- und temperaturbeständigen Verbindungen hervorgetan. Allerdings sind unter Umständen auch verschiedene bekannte Schweißverfahren, Sinter- oder Klebtechniken möglich.

Gemäß einer Weiterbildung hat die Faserlage eine erste Länge und eine erste Breite und die mindestens eine Decklage eine zweite Länge und eine zweite Breite, wobei die erste Länge und/oder die erste Breite der Faserlage kleiner als die zweite Länge und/oder zweite Breite der mindestens einen Decklage ist/sind. Das bedeutet, dass sich die Decklagen bei konzentrischer Anordnung der Deck- und Faserlagen zumindest teilweise über die Begrenzungen der Faserlage hinaus erstrecken. Somit werden Überlappungsabschnitte gebildet, die bevorzugt zur Ausbildung der fügetechnischen Verbindung (Randbereich) herangezogen werden.

Betreffend die Faserlage wird vorgeschlagen, dass diese eine Ausdehnung von 0,01 mm bis 1 mm hat. Bevorzugt werden dabei Faserlagen, die eine eigene Porosität von über 85 % aufweisen. Tests mit Fasern, welche einen Durchmesser zwischen 0,008 mm und 0,015 mm aufweisen, haben ein sehr befriedigendes Ergebnis im Hinblick auf die Filtrationswirkung gezeigt.

Gerade in Verbindung eines derartigen Filterverbundes mit dem sogenannten offenen Filter wird zur Unterstützung der Strömungsumlenkung vorgeschlagen, dass wenigstens eine Decklage mindestens eine Strömungsleitfläche aufweist. Darunter ist zu verstehen, dass die Decklage nicht vollständig eben ist, sondern deren Oberfläche eine Struktur bzw. Mikrostruktur bildet, die Flächen zur Strömungsumleitung bereitstellt. So ist beispielsweise eine Struktur quer zur Strömungsrichtung des Abgases vorteilhaft, wobei hier unter Umständen eine Strukturhöhe von wenigen Millimetern (kleiner 2 mm, insbesondere kleiner 1 mm) ausreicht. Diese Strömungsleitflächen tragen zur gezielten Beeinflussung der Strömungsrichtung bei, wodurch der Filterwirkungsgrad insgesamt verbessert wird.

Entsprechend einem weiteren Aspekt der Erfindung wird ein Filterkörper vorgeschlagen, der zur Reinigung eines Abgasstromes einer Verbrennungskraftmaschine eingesetzt werden kann. Dieser Filterkörper weist mindestens einen oben beschriebenen Filterverbund auf, der zumindest teilweise so in einem Gehäuse angeordnet ist, dass Kanäle, insbesondere gemäß einer Wabenstruktur, gebildet sind, wobei die Kanäle vorzugsweise zumindest teilweise verengt sind. Dies bedeutet, dass sich der vorgeschlagene Filterverbund sowohl für den Einsatz in Filtersystemen mit abwechselnd verschlossenen Kanälen eignet, als auch zur Herstellung von offenen Filterkörpern mit einer Blickdichtheit größer 20 %, insbesondere größer 40 %, dienen kann.

Im Hinblick auf einen offenen Filterkörper ist es beispielsweise möglich, diesen aus gewellten Blechfolien und im wesentlichen glatten Filterverbunden aufzubauen, die zunächst abwechselnd aufeinander gestapelt und anschließend gemeinsam gewunden und/oder gewickelt werden. Die gewellte Blechfolie weist dabei Umlenkstrukturen auf, welche das den Filterkörper durchströmende Abgas zumindest teilweise hin zu dem porösen Filterverbund hin lenken. Der Filterverbund wird somit zumindest teilweise von dem Abgas durchströmt, wobei insbesondere Partikel mit einer Partikelgröße zwischen 20 und 200 nm herausgefiltert werden. Je nachdem, wie häufig ein Teilgasstrom mit Hilfe derartiger Umlenkeinrichtungen durch eine solche Wand aus Filterverbund-Material hindurchgeführt wird, wird bei axialer Durchströmung des Filterkörpers ein zunehmender Filtrationseffekt festgestellt.

Gemäß einer weiteren Ausgestaltung des Filterkörpers weist wenigstens eine Decklage zumindest teilweise eine Struktur auf, welche im wesentlichen die Kanäle begrenzt. Dies bedeutet mit anderen Worten, dass die Struktur im wesentlichen den Strömungsquerschnitt des Kanals definiert. Vorteilhafterweise werden die Decklagen bzw. die Faserlage gemeinsam mit einer solchen Struktur versehen, wobei sich hier insbesondere eine Wellung anbietet.

Das Verfahren zur Herstellung eines erfindungsgemäßen Filterverbundes, wie er oben beschrieben wurde, umfasst dabei gemäß einem weiteren Aspekt der Erfindung folgende Schritte:
- Einbringen einer Porosität in mindestens eine Decklage, wobei mindestens ein Randbereich ausgespart wird,
- Anordnen einer Faserlage auf einer Decklage,
- Ausbilden einer Hülle mit der mindestens einen Decklage, und
- Ausbilden einer fügetechnischen Verbindung in dem mindestens einen Randbereich, so dass die Faserlage unverlierbar zwischen der mindestens einen Decklage fixiert ist.

Das Einbringen einer Porosität in die Decklage kann beispielsweise schon bei der Herstellung des Materials der Decklage generiert werden. Allerdings ist es auch möglich, die Porosität dadurch herzustellen, dass ein für ein Fluid undurchlässiger Werkstoff nachträglich mit Bohrungen, Öffnungen, Durchlässen od. dgl. versehen wird. Hierbei können insbesondere trennende Fertigungsverfahren (Schneiden, Stanzen, Bohren od. dgl.), Ätzverfahren oder eine thermische Behandlung, insbesondere mit einem Laser, zum Einsatz gelangen. Zur Bildung der Faserlage können alle bereits bekannten Techniken eingesetzt werden, so dass Gestricke, Gewebe oder ähnliche Gebilde aus faserartigem Material gebildet wird.

Gemäß einer Weiterbildung des Verfahrens erfolgt das Ausbilden einer Hülle durch Umformen einer Decklage, insbesondere mittels Biegen, Knicken oder Falzen der Decklage in einem Umformbereich. Dieser Verfahrensschritt bietet sich insbesondere zur Herstellung eines erfindungsgemäßen Filterverbundes an, der nur eine Decklage aufweist. Dabei kann es im Hinblick auf die hohe thermische und dynamische Beanspruchung der Decklage im Einsatz von Vorteil sein, wenn die benachbart zueinander angeordneten Abschnitte der einen Decklage im Umformbereich zusätzlich fügetechnisch miteinander verbunden sind. Insofern wird sichergestellt, dass die Faserlage auch dann noch unverlierbar angeordnet ist, falls die Decklage im Bereich der Biegung einmal aufreißen sollte.

Weiterhin wird vorgeschlagen, dass das Ausbilden einer Hülle mittels zwei Decklagen erfolgt, wobei die mindestens eine Faserlage so zwischen den Decklagen angeordnet ist, dass die Randbereiche der Decklagen sich zumindest teilweise direkt überlagern. Das bedeutet, dass zwischen dem benachbart angeordneten Randbereich der Decklagen kein Fasermaterial angeordnet ist, und eine fügetechnische Verbindung in diesem Randbereich keine Beschädigung der Faserlage zur Folge hat. Zudem wird sichergestellt, dass die fügetechnische Verbindung in dem Randbereich über einen sehr langen Zeitraum den hochkorrosiven Bedingungen im Abgassystem der Verbrennungskraftmaschine standhalten kann.

Gemäß einer Weiterbildung des Verfahrens wird vor dem Anordnen der Faserlage auf der Decklage eine Struktur in zumindest eine der Decklagen eingebracht. Weist der Filterverbund zwei Decklagen zur Ausbildung einer Hülle auf, so wird vorteilhafterweise vorgeschlagen, dass das Einbringen der Struktur in die zwei Decklagen zeitlich nacheinander erfolgt, und jeweils eine andere Struktur erzeugt wird. Dies ermöglicht beispielsweise die Ausbildung von unterschiedlichen Kanaldichten über den Querschnitt des Filterkörpers, so dass eine gezielte Abstimmung der jeweiligen Kanalquerschnittsformen bzw. Kanaldichten auf das Anströmprofil des Abgasstromes gewährleistet ist.

Im Hinblick auf die Ausgestaltung der fügetechnischen Verbindung der Decklagen miteinander wird alternativ vorgeschlagen, die fügetechnische Verbindung durch einen Schweißvorgang oder durch einen Lötvorgang auszuführen. Dies stellen besonders bevorzugte Ausgestaltungen des Verfahrens dar, wobei unter Umständen auch fügetechnische Verbindungen über Sinter- oder Klebprozesse möglich sind.

Gemäß noch einer weiteren Ausgestaltung des Verfahrens wird die wenigstens eine Decklage außerhalb des mindestens einen Randbereiches mit einem Lotstopp versehen. Als Lotstopp können bekannte Öle, Lacke, Wachse, keramische Schichten od. dgl. vorgesehen werden, die verhindern, dass das Lotmittel in innenliegende Bereiche der Hülle vordringt, in welcher die Faserlage angeordnet ist. Somit ist einerseits sichergestellt, dass das Lot nicht zur Reduzierung der Porosität der Faserlage beiträgt, andererseits auch die für die Lotverbindung berechnete Menge Lotmittel tatsächlich an der zu fügenden Stelle bereitgestellt wird.

Die Erfindung wird nun anhand der Figuren näher erläutert, welche besonders vorteilhafte und besonders bevorzugte Ausgestaltungen des Filterverbundes bzw. des Filterkörpers zeigen. Weiterhin dienen die Figuren zur Veranschaulichung des beschriebenen erfindungsgemäßen Verfahrens. Dennoch sei an dieser Stelle klargestellt, dass die Erfindung nicht auf die in den Figuren dargestellten Ausführungsbeispiele begrenzt ist.

Es zeigen:
- Fig. 1: schematisch und perspektivisch eine erste Ausführungsform des Filterverbundes,
- Fig. 2: eine Schnittansicht einer weiteren Ausführungsform des Filterverbundes,
- Fig. 3: einen Ausschnitt einer Ausführungsform des erfindungsgemäßen Filterkörpers,
- Fig. 4: eine Detailansicht aus Fig. 3,
- Fig. 5: schematisch eine Abgasanlage,
- Fig. 6: schematisch und perspektivisch eine Detailansicht einer weiteren Ausführungsform des Filterkörpers,
- Fig. 7: schematisch und perspektivisch eine weitere Ausgestaltung des Filterkörpers, und
- Fig. 8: schematisch und perspektivisch eine weitere Ausführungsform des erfindungsgemäßen Filterkörpers.

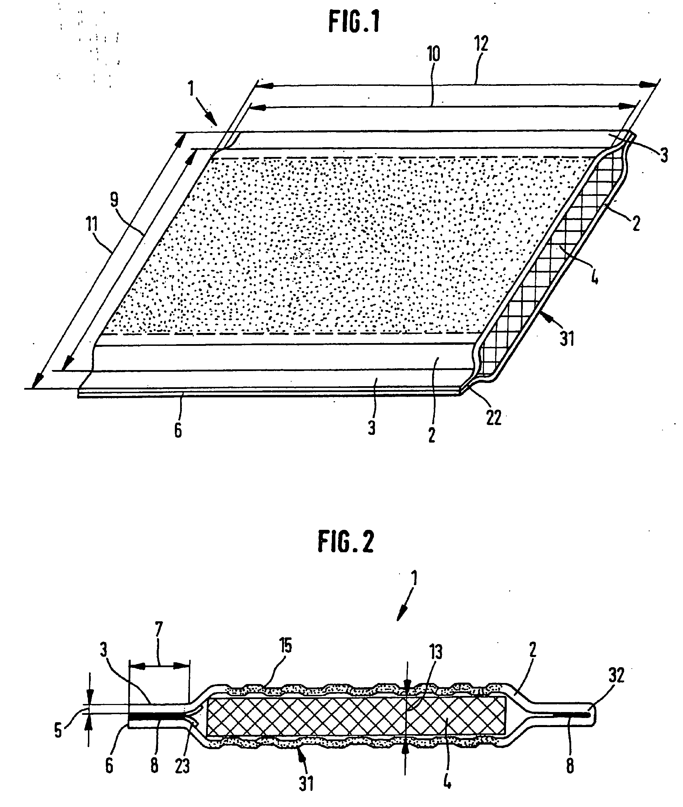

Fig. 1 zeigt schematisch und perspektivisch eine Ausführungsform des erfindungsgemäßen Filterverbundes 1 mit zwei Decklagen 2. Die Decklagen 2 sind zumindest teilweise aus einem porösem Material aufgebaut (siehe gepunkteter Bereich) und weisen jeweils zwei Randbereiche 3 auf gegenüberliegenden Seiten auf Weiterhin umfasst der Filterverbund 1 eine Faserlage 4 aus einem Fasergewebe. Die beiden Decklagen 2 bilden eine die Faserlage 4 umschließende Hülle 31, so dass die Faserlage 4 im Inneren der beiden Decklagen 2 unverlierbar angeordnet ist. Die beiden Decklagen 2 sind in den Randbereichen 3 nahe einer Kante 6 fügetechnisch miteinander verbunden (Verbindung 22), insbesondere ' miteinander verlötet oder verschweißt.

Die Faserlage 4 hat eine erste Länge 9 und eine erste Breite 10. Die Decklagen 2 weisen jeweils eine zweite Länge 11 und eine zweite Breite 12 auf, wobei diese in der dargestellten Ausführungsform jeweils den gleichen Betrag (gleich lang und gleich breit) aufweisen. Prinzipiell können die zweite Länge 11 und die zweite Breite 12 der zur Bildung des Filterverbundes 1 bzw. der Hülle 31 verwendeten Decklagen 2 betragsmäßig auch unterschiedlich ausgeführt sein. Weiterhin ist dargestellt, dass die Decklagen 2 eine zweite Länge 11 aufweisen, welche betragsmäßig größer als die erste Länge 9 der Faserlage 4 ausgeführt ist. Somit überlappen die Decklagen 2 in der Länge die Faserlage 4, so dass die Randbereiche 3 aufeinander aufliegen können. Dies unterstützt die Ausbildung von dauerhaften Verbindungen 22.

Fig. 2 zeigt schematisch und in einer Schnittansicht eine weitere Ausfiihrungsform eines Filterverbundes 1, wobei dieser lediglich eine Decklage 2 aufweist, welche die Hülle 31 bildet. Die Decklage 2 hat mindestens einen Randbereich 3 und einen gegenüberliegenden Umformungsbereich 32, wobei die Decklage 2 in dem Randbereich 3 mit sich selbst fügetechnisch verbunden ist. Die fügetechnische Verbindung wird hier mittels eines Lotmittels 8 sichergestellt, wobei außerhalb des Randbereichs 3 ein Lotstopp 23 vorgesehen ist, welches verhindert, dass das Lotmittel 8 während einer thermischen Behandlung in die Nähe der Faserlage 4 gelangt. In der dargestellten Ausführungsform ist innen in dem Umformungsbereich 32 Lotmittel 8 vorgesehen, wobei auch hier ggf. Lotstopp 23 vorgesehen werden kann. Der Randbereich 3 erstreckt sich von einer Kante 6 der Decklage 2 über eine Randbreite 7 hin, die vorzugsweise zwischen 3 und 15 mm beträgt.

Bezüglich der Materialdicken lässt sich anhand Fig. 2 erläutern, dass die Decklage 2 beispielsweise eine Metallfolie ist, und eine Dicke 5 aufweist, die kleiner 0,04 mm beträgt. Weiter lässt sich erkennen, dass die Faserlage 4 eine Ausdehnung 13 hat. Diese liegt bevorzugt im Bereich von 0,01 mm bis 1 mm.

Aus der Fig. 2 lässt sich ebenfalls eine Decklage 2 erkennen, welche mit Strömungsleitflächen 15 versehen ist. Diese ist insbesondere als Mikrostruktur ausgebildet. Bei der dargestellten Ausfiihrungsform werden mit dieser Mikrostruktur bzw. den Strömungsleitflächen zwei Funktionen erfüllt. Einerseits wird das (von einem Randbereich 3 zum Umformungsbereich 32 oder umgekehrt) vorbeiströmende Abgas umgelenkt bzw. verwirbelt, so dass Teilgasströme zur benachbarten porösen Wand, insbesondere einem erfindungsgemäßen Filterverbund, hin abgelenkt werden bzw. diese durchdringen. Weiterhin lässt sich erkennen, dass mit einer solchen Mikrostruktur auch eine Klemmwirkung in Bezug auf die innenliegende Faserlage 4 bewirkt wird. Dies verbessert die Stabilität des Filterverbundes 1.Außerdem ermöglicht dies, dass die Porosität der Decklage 2 erhöht werden kann, da die zusätzlich eingeleiteten Klemmkräfte bereits mögliche Auflösungserscheinungen der Faserlage 4 ausreichend verhindern.

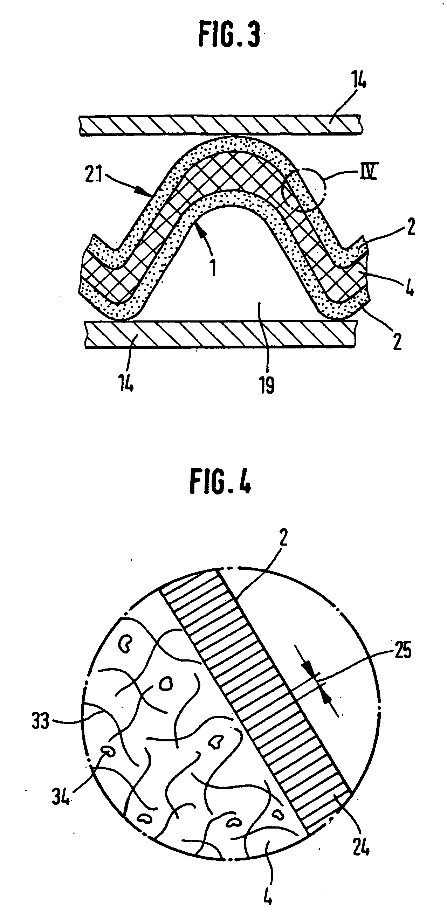

Fig. 3 zeigt schematisch eine Detailansicht einer Ausfiihrungsform eines erfindungsgemäßen Filterkörpers. Der Filterkörper 16 ist aufgebaut aus Trennwänden 14, zwischen denen mindestens ein Filterverbund 1 angeordnet ist. Der Filterverbund 1 ist hier ebenso wie die Trennwände 14 in Schnittdarstellung gezeigt, wobei die beiden Decklagen 2 wiederum eine Hülle 31 (nicht dargestellt) um die Faserlage 4 bilden. In der dargestellten Ausführungsform weist der Filterverbund 1 eine Struktur 21 auf, welche im wesentlichen die Funktion erfüllt, dass die glatten Trennwände 14 voneinander beabstandet sind und Kanäle 19 gebildet werden. Der Kanal 19 hat eine Querschnittsfläche, die im wesentlichen von dieser Struktur 21 des Filterverbundes 1 bestimmt wird.

Fig. 4 zeigt stark vereinfacht eine Detailansicht des mit "V" gekennzeichneten Ausschnitts aus Fig. 3. Dabei wird die Faserlage 4 von einer Decklage 2 begrenzt. Die Decklage 2 weist eine Vielzahl von Öffnungen 24 mit einem Öffnungsdurchmesser 25 auf. Der Öffnungsdurchmesser 25 variiert stark je nach Anwendungsfall und liegt bevorzugt im Bereich zwischen 2 und 6 mm. Unter Umständen ist es jedoch auch vorstellbar, dass derartige Öffnungen mit Öffnungsdurchmesser kleiner als 1 mm oder sogar 0,1 mm ausgeführt sind. Wie ebenfalls stark vereinfacht dargestellt, umfasst die Faserlage 4 eine Vielzahl von Fasern 33, die zu einem Gestrick, Gewebe od. dgl. angeordnet sind. Alternativ können dies auch Metallfasern, gesinterte Materialien oder Drahtgewebe sein. In der dargestellten Ausführungsform sind in der Faserlage 4 zusätzliche Elemente oder Bestandteile integriert, insbesondere Katalysatoren 34, welche die Regenerierung von eingelagerten Rußpartikeln od. dgl. schon bei niedrigen Temperaturen (beispielsweise zwischen 200 und 300°C) unterstützen.

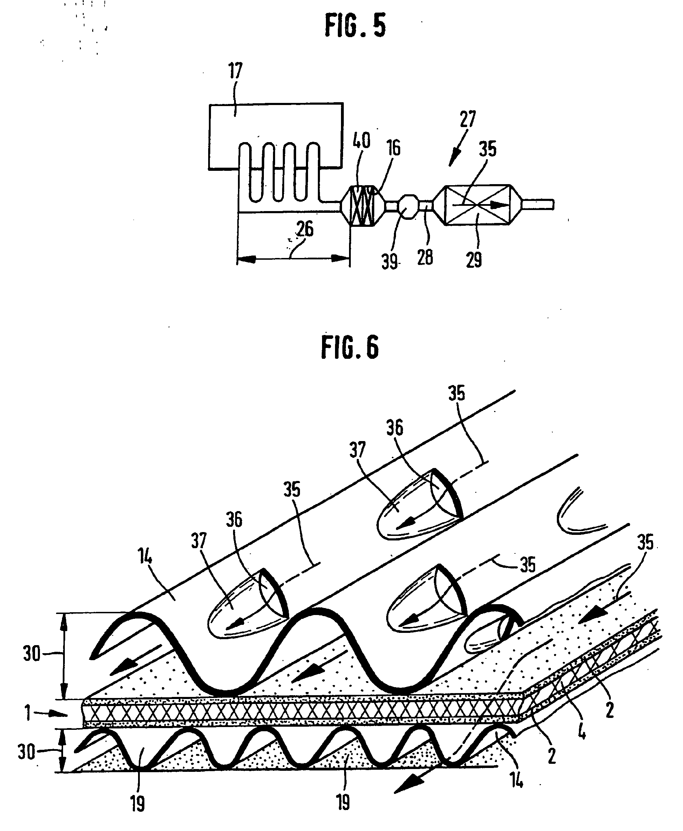

Fig. 5 zeigt schematisch den Aufbau eines Abgassystems 27 für eine Verbrennungskrafhnaschine 17. Eine solche Verbrennungskraftmaschine 17 ist bevorzugt als Dieselmotor ausgeführt. Das Abgassystem 27 umfasst in Strömungsrichtung 35 des Abgases folgende Komponenten:
- einen stromaufwärts angeordneten Oxidationskatalysator 40,
- einen erfindungsgemäßen Filterkörper 16,
- einen Turbolader 29, und
- einen weiteren katalytischen Konverter 29.
Die einzelnen Komponenten können in getrennten Gehäusen oder teilweise gemeinsamen miteinander in einem Gehäuse angeordnet sein und sind über eine Abgasleitung 28 miteinander verbunden. Wie bereits in der Einleitung ausgeführt, ist es besonders vorteilhaft, den Filterkörper 16 möglichst nahe an der Verbrennungskraftmaschine 17 anzuordnen. Insbesondere eignet sich hierzu ein Abstand 26 von der Verbrennungskraftmaschine 17, der kleiner 0,7 m beträgt, insbesondere sogar kleiner 30 cm ist. Bei einer solchen Anordnung der einzelnen Komponenten wird zunächst mit Hilfe des Oxidationskatalysators 40 eine ausreichende Menge von Stickstoffdioxid zur Verfügung gestellt, der im direkt nachgeschalteten Filterkörper 16 eine Regenerierung (kontinuierlich) der eingelagerten Rußpartikel sicherstellt. Der nachgeschaltete katalytische Konverter 29 kann beispielsweise auch als Hybrid-Konverter ausgeführt sein, wobei dieser Teilbereiche mit unterschiedlicher Wärmekapazität aufweist. Dabei ist dieser so auszulegen, dass er in Strömungsrichtung eine zunehmende Wärmekapazität hat.

Fig. 6 zeigt schematisch und perspektivisch eine weitere Ausführungsform des erfindungsgemäßen Filterkörpers 16. Der Filterkörper 16 umfasst hierbei wiederum Trennwände 14, zwischen die jeweils ein erfindungsgemäßer Filterverbund 1 angeordnet ist. In der dargestellten Ausführungsform ist der Filterverbund 1 mit zwei Decklagen 2 und einer dazwischen angeordneten Faserlage 4 gebildet, wobei die fügetechnische Verbindung in dem Randbereich aufgrund der Schnittdarstellung nicht erkennbar ist. Die Trennwände 14 sind hier mit einer Struktur versehen, während der Filterverbund 1 eine im wesentlichen glatte Oberfläche aufweist. Mit Hilfe dieser Struktur der Trennwände 14 werden Kanäle 19 gebildet, die für ein Abgas in einer Strömungsrichtung 35 durchströmbar sind. Die Trennwände 14 weisen hier unterschiedliche Höhen 30 der Struktur auf, so dass die gebildeten Kanäle 19 auf die Charakteristik des anströmenden Abgasstromes abgestimmt sind.

Die hier dargestellte Ausführungsform zeigt im wesentlichen einen offenen Filter. Diese Eigenschaft wird dadurch beschrieben, dass eine Strömungsfreiheit von mindestens 20 % gegeben ist. Strömungsfreiheit bedeutet in diesem Zusammenhang, dass in jedem beliebigen Querschnitt mindestens 20 % der Fläche durchschaubar sind, das heißt frei von Einbauten wie Umlenkflächen 37 oder dergleichen. Das heißt mit anderen Worten auch, dass bei einer stirnseitigen Ansicht eines solchen Partikelfilters zumindest teilweise durch die Kanäle hindurchgeschaut werden kann, sofern die Einbauten alle etwa die gleiche Einbaulage haben, also fluchtend angeordnet hintereinander sind. Dies ist bei Wabenkörpern aus zumindest teilweise strukturierten Blechlagen typischerweise gegeben. Die Strömungsfreiheit bedeutet aber für nicht miteinander fluchtende Einbauten nicht zwingend, dass man tatsächlich teilweise durch einen solchen Wabenkörper hindurchschauen kann. Die Trennwände 14 sind mit Durchlässen 36 und Umlenkflächen 37 versehen, die eine Umlenkung des Abgasstromes hin zum Filterverbund 1 gewährleisten. Dabei werden Druckunterschiede erzeugt, die zur Folge haben, dass Teilabgasströme den Filterverbund 1 durchdringen und damit eine Anhaftung bzw. Ablagerung von Rußpartikeln oder ähnlichem in der Faserlage 4 erfolgt.

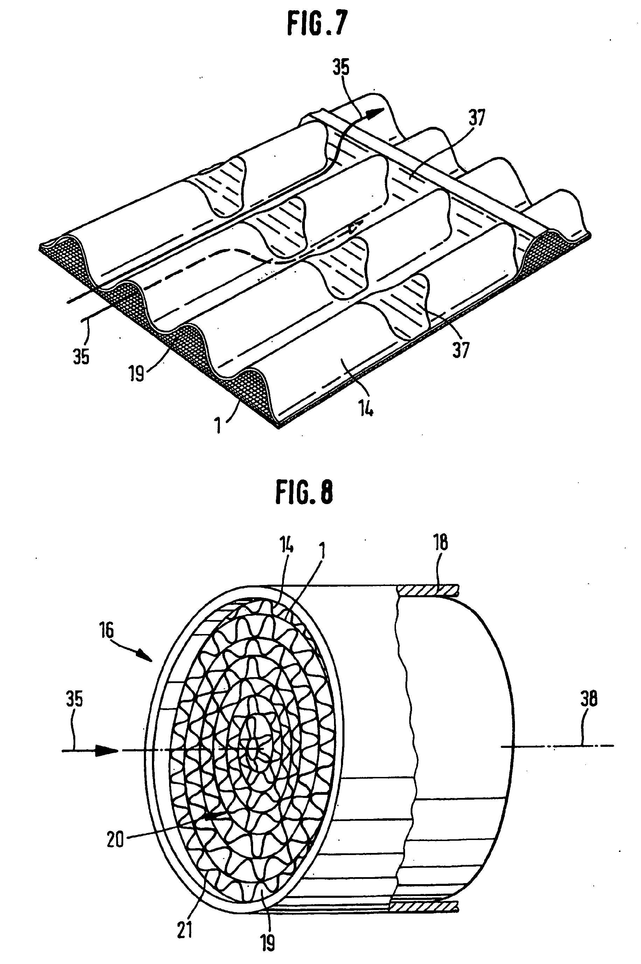

Fig. 7 zeigt eine etwas andere Ausgestaltung eines erfindungsgemäßen Filterkörpers. Auch hier werden die Kanäle 19 im wesentlichen durch eine entsprechende Struktur der Trennwände 14 generiert. Weiterhin weisen die Trennwände 14 Umlenkflächen 17 auf, welche im dargestellten Fall den gesamten Querschnitt der Kanäle 19 verschließen. Dies hat zur Folge, dass das Abgas mit seiner Strömungsrichtung 35 derart beeinflusst wird, dass das Partikel enthaltende Abgas durch den Filterverbund 1 hindurch geleitet wird. Diese Ausgestaltung ist hauptsächlich für Anwendungen geeignet, bei denen ein Druckverlust unkritisch ist. Bei mobilen Abgassystemen ist nach derzeitigem Kenntnisstand ein offener Filter mit nur verengten und nicht verschlossenen Kanälen 19 bevorzugt. In Abhängigkeit von der Anzahl der für das Abgas zu passierenden Umlenkflächen 37 bzw. dem Durchströmen eines Filterverbundes 1 wird letztendlich auch bei einem offenen Filterkörper 16, wie in Fig. 6 dargestellt, im wesentlichen der gesamte Abgasstrom gefiltert und gereinigt.

Fig. 8 zeigt schematisch und perspektivisch eine Ausgestaltung des Filterkörpers 16 mit einem Filterverbund 1 und einer Trennwand 14, die spiralig zu einem Wabenkörper gewickelt und in einem Gehäuse 18 angeordnet sind. Dabei weist die Trennwand 14 eine Struktur 21 auf, so dass für das Abgas in einer Strömungsrichtung 35 durchströmbare Kanäle 19 gebildet sind. Das Abgas tritt in den Filterkörper 16 über eine Stirnseite 20 ein und nimmt infolge der Strömungsumleitungen bei einem offenen Filter im Inneren einen Strömungsweg, der vorzugsweise länger als die Erstreckung der Kanäle 19 in Richtung der Achse 38 ist.

Der hier beschriebene Filterverbund bzw. der damit aufgebaute Filterkörper eignet sich insbesondere für einen motornahen Einbau in mobile Abgassysteme. Die dort aufgrund der Nähe zum Brennraum auftretenden hohen Druckschläge bzw. den hohen Temperaturen bis 700°C, zeitweise sogar bis 1000°C, hält der vorgeschlagene Filterverbund dauerhaft stand, da die Faserlage zumindest teilweise formschlüssig von einer mit mindestens einer Decklage gebildeten Schutzhülle umfasst ist. Dadurch wird verhindert, dass die Faserlage bereits nach kurzer Zeit Auflösungserscheinungen zeigt. Das vorgeschlagene Verfahren ist sehr einfach und lässt sich ohne große technische Schwierigkeiten auch im Hinblick auf eine Großserienfertigung, wie sie für den Automobilbau üblich ist, prozesssicher auslegen.

### Bezugszeichenliste

- 1: Filterverbund
- 2: Decklage
- 3: Randbereich
- 4: Faserlage
- 5: Dicke
- 6: Kante
- 7: Randbreite
- 8: Lotmittel
- 9: Erste Länge
- 10: Erste Breite
- 11: Zweite Länge
- 12: Zweite Breite
- 13: Ausdehnung
- 14: Trennwand
- 15: Strömungsleitfläche
- 16: Filterkörper
- 17: Verbrennungskraftmaschine
- 18: Gehäuse
- 19: Kanal
- 20: Stirnseite
- 21: Struktur
- 22: Verbindung
- 23: Lotstop
- 24: Öffnung
- 25: Öffnungsdurchmesser
- 26: Abstand
- 27: Abgassystem
- 28: Abgasleitung
- 29: Katalytischer Konverter
- 30: Höhe
- 31: Hülle
- 32: Umformungsbereich
- 33: Faser
- 34: Katalysator
- 35: Strömungsrichtung
- 36: Durchlass
- 37: Umlenkfläche
- 38: Achse.
- 39: Turbolader
- 40: Oxidationskatalysator

## Patentansprüche

1. Filterverbund (1), der für ein Fluid durchströmbar ist, umfassend mindestens eine Decklage (2) aus zumindest teilweise porösem Material mit mindestens einem Randbereich (3) und mindestens eine Faserlage (4) aus einem Fasergewebe, die mindestens eine Decklage (2) eine die Faserlage (4) umschließende Hülle (31) bildet, so dass die Faserlage (4) im Inneren der mindestens einen Decklage (2) unverlierbar angeordnet ist, **dadurch gekennzeichnet, dass** die mindestens eine Decklage (2) eine Metallfolie mit einer Dicke (5) kleiner 0,04 mm ist, insbesondere kleiner 0,03 mm oder sogar kleiner 0,02 mm..

2. Filterverbund (1) nach Anspruch 1, wobei die Hülle (31) aus einer Decklage (2) gebildet ist, **dadurch gekennzeichnet, dass** die Decklage (2) mindestens einen Randbereich (3) und einen gegenüberliegenden Umformungsbereich (32) hat, wobei die Decklage (2) in dem mindestens einen Randbereich (3) mit sich selbst fügetechnisch verbunden ist.

3. Filterverbund (1) nach Anspruch 1, wobei mindestens zwei Decklagen (2) die Hülle (31) bilden, **dadurch gekennzeichnet, dass** die Decklagen (2) miteinander in mindestens einem Randbereich (3) fügetechnisch verbunden sind, und die Faserlage (4) zwischen diesen miteinander verbundenen Decklagen (2) unverlierbar angeordnet ist.

4. Filterverbund (1) nach einem der Ansprüch1 1 bis 3, **dadurch gekennzeichnet, dass** mindestens eine Decklage (2) in mindestens einen Randbereich (3) eine reduzierte Porosität gegenüber dem übrigen Bereich hat, insbesondere dort keine Porosität aufweist.

5. Filterverbund (1) nach einem der vorhergehenden Ansprüche, **dadurch gekennzeichnet, dass** dieser eine mittlere Porosität größer 70%, insbesondere größer 90% haben.

6. Filterverbund (1) nach einem der Ansprüche 2 bis 5, **dadurch gekennzeichnet, dass** sich der mindestens eine Randbereich (3) von einer Kante (6) der Decklage (2) über eine Randbreite (7) hin erstreckt, die zwischen 3 mm und 15 mm beträgt, wobei der Randbereich (3) vorzugsweise zumindest an zwei gegenüberliegenden Kanten (6) angeordnet ist.

7. Filterverbund (1) nach einem der vorhergehenden Ansprüche, **dadurch gekennzeichnet, dass** die fügetechnische Verbindung mittels eines Lotmittel (8) aufgeführt ist.

8. Filterverbund (1) nach einem der vorhergehenden Ansprüche, **dadurch gekennzeichnet, dass** die Faserlage (4) eine Erste Länge (9) und eine Erste Breite (10) hat, und die mindestens eine Decklage (2) eine Zweite Länge (11) und eine Zweite Breite (12) aufweist, wobei die Erste Länge (9) und/oder Erste Breite (10) kleiner als die Zweite Länge (11) und/oder Zweite Breite (12) ist/sind.

9. Filterverbund (1) nach einem der vorhergehenden Ansprüche, **dadurch gekennzeichnet, dass** die Faserlage (4) eine Ausdehnung (13) von 0,01 mm bis 1 mm hat.

10. Filterverbund (1) nach einem der vorhergehenden Ansprüche, **dadurch gekennzeichnet, dass** wenigstens eine Decklagen (2) mindestens eine Strömungsleitfläche (15) aufweist.

11. Filterkörper (16) zur Reinigung eines Abgasstromes einer Verbrennungskraftmaschine (17), **dadurch gekennzeichnet, dass** mindestens ein Filterverbund (1) nach einem der Ansprüche 1 bis 10 zumindest teilweise so in einem Gehäuse (18) angeordnet ist, dass Kanälen (19), insbesondere gemäß einer Wabenstruktur, gebildet sind, wobei die Kanäle (19) vorzugsweise zumindest teilweise verengt sind.

12. Filterkörper (16) nach Anspruch 11, **dadurch gekennzeichnet, dass** wenigstens eine Decklagen (2) zumindest teilweise eine Struktur (21) aufweist, welche im wesentlichen die Kanäle (19) begrenzt.

13. Verfahren zur Herstellung eines Filterverbundes (1) nach einem der Ansprüche 1 bis 10 mit folgenden Schritten:
- Einbringen einer Porosität in mindestens eine Decklage (2), wobei mindestens ein Randbereich (3) ausgespart wird,
- Anordnen einer Faserlage (4) auf einer Decklage (2),
- Ausbilden einer Hülle (31) mit der mindestens einen Decklage (2), und
- Ausbilden einer fügetechnischen Verbindung in dem mindestens einen Randbereich (3), so dass die Faserlage (4) unverlierbar zwischen der mindestens einen Decklagen (2) fixiert ist.

14. Verfahren nach Anspruch 13, bei dem das Ausbilden einer Hülle (31) durch Umformen einer Decklage (2) erfolgt, insbesondere mittels Biegen, Knicken oder Falzen der Decklage (2) in einem Umformbereich (32).

15. Verfahren nach Anspruch 13, bei dem das Ausbilden einer Hülle (31) mittels zwei Decklagen (2) erfolgt, wobei die mindestens eine Faserlage (4) so zwischen den Decklagen (2) angeordnet wird, dass die Randbereiche der Decklagen (2) sich zumindest teilweise direkt überlagern.

16. Verfahren nach einem der Ansprüche 13 bis 15, bei dem vor dem Anordnen der Faserlage (4) auf der Decklage (2) eine Struktur (21) in zumindest eine Decklagen (2) eingebracht wird.

17. Verfahren nach Anspruch 16, wobei zwei Decklagen (2) zur Ausbildung einer Hülle (31) verwendet werden, bei dem das Einbringen der Struktur (21) in die zwei Decklagen (2) zeitlich nacheinander erfolgt, und jeweils eine andere Struktur (21) erzeugt wird.

18. Verfahren nach einem der Ansprüche 13 bis 17, bei dem die fügetechnische Verbindung durch einen Schweißvorgang ausgeführt wird.

19. Verfahren nach einem der Ansprüche 13 bis 17, bei dem die fügetechnische Verbindung durch Lötvorgang ausgeführt wird.

20. Verfahren nach Anspruch 19, bei dem wenigstens eine Decklage (2) außerhalb des mindestens einen Randbereiches (3) mit einem Lotstop (23) versehen wird.

## Claims

1. A filter assembly (1), through which a fluid can flow and which comprises at least one covering layer (2) formed from at least partially porous material having at least one boundary region (3), and at least one fiber layer (4) made from a fiber fabric, wherein the at least one covering layer (2) forms a sleeve (31) which surrounds the fiber layer (4), so that the fiber layer (4) is arranged captively inside the at least one covering layer (2), **characterized in that** the at least one covering layer (2) is a metal foil with a thickness (5) of less than 0.04 mm, in particular less than 0.03 mm or even less than 0.02 mm.

2. The filter assembly (1) as claimed in claim 1, in which the sleeve (31) is formed from a covering layer (2), **characterized in that** the covering layer (2) has at least one boundary region (3) and an opposite deformation region (32), the covering layer (2) being connected to itself by joining in the at least one boundary region (3).

3. The filter assembly (1) as claimed in claim 1, in which at least two covering layers (2) form the sleeve (31), **characterized in that** the covering layers (2) are connected to one another by joining in at least one boundary region (3), and the fiber layer (4) is arranged captively between these interconnected covering layers (2).

4. The filter assembly (1) as claimed in one of claims 1 to 3, **characterized in that** at least one covering layer (2), in at least one boundary region (3), has a reduced porosity with respect to the remaining region, in particular has no porosity there.

5. The filter assembly (1) as claimed in one of the preceding claims, **characterized in that** it has a mean porosity of greater than 70%, in particular greater than 90%.

6. The filter assembly (1) as claimed in one of claims 2 to 5, **characterized in that** the at least one boundary region (3) extends from an edge (6) of the covering layer (2) over a boundary width (7), which amounts to between 3 mm and 15 mm, the boundary region (3) preferably being arranged at least at two opposite edges (6).

7. The filter assembly (1) as claimed in one of the preceding claims, **characterized in that** the connection by joining is produced by means of a brazing material (8).

8. The filter assembly (1) as claimed in one of the preceding claims, **characterized in that** the fiber layer (4) has a first length (9) and a first width (10), and the at least one covering layer (2) has a second length (11) and a second width (12), the first length (9) and/or first width (10) being less than the second length (11) and/or second width (12).

9. The filter assembly (1) as claimed in one of the preceding claims, **characterized in that** the fiber layer (4) has a dimension (13) of from 0.01 mm to 1 mm.

10. The filter assembly (1) as claimed in one of the preceding claims, **characterized in that** at least one covering layer (2) has at least one flow-guiding surface (15).

11. A filter body (16) for purifying an exhaust-gas stream from an internal combustion engine (17), **characterized in that** at least one filter assembly (1) as claimed in one of claims 1 to 10 is at least partially arranged in a casing (18) in such a way that passages (19), in particular corresponding to a honeycomb structure, are formed, the passages (19) preferably being at least partially narrowed.

12. The filter body (16) as claimed in claim 11, **characterized in that** at least one covering layer (2), at least in part, has a structure (21) which substantially delimits the passages (19).

13. A process for producing the filter assembly (1) as claimed in one of claims 1 to 10, comprising the following steps:
- forming a porosity in at least one covering layer (2), with at least one boundary region (3) being left out,
- arranging a fiber layer (4) on a covering layer (2),
- forming a sleeve (31) using the at least one covering layer (2), and
- forming a connection by joining in the at least one boundary region (3), so that the fiber layer (4) is fixed captively within the at least one covering layer (2).

14. The process as claimed in claim 13, in which the step of forming a sleeve (31) is effected by deforming a covering layer (2), in particular by bending, creasing or folding the covering layer (2) in a deformation region (32).

15. The process as claimed in claim 13, in which the step of forming a sleeve (31) is carried out by means of two covering layers (2), the at least one fiber layer (4) being arranged between the covering layers (2) in such a way that the boundary regions of the covering layers (2) are at least in part directly superimposed on one another.

16. The process as claimed in one of claims 13 to 15, in which, before the fiber layer (4) is arranged on the covering layer (2), a structure (21) is introduced into at least one covering layer (2).

17. The process as claimed in claim 16, in which two covering layers (2) are used to form a sleeve (31), and in which the structure (21) is introduced into the two covering layers (2) successively in terms of time, and in each case a different structure (21) is produced.

18. The process as claimed in one of claims 13 to 17, in which the connection by joining is carried out by means of a welding operation.

19. The process as claimed in one of claims 14 to 18, in which the connection by joining is carried out by means of a brazing operation.

20. The process as claimed in claim 19, in which at least one covering layer (2) is provided with a brazing stop (23) outside the at least one boundary region (3).

## Revendications

1. Filtre composite (1) à travers lequel un fluide peut s'écouler, comportant au moins une couche de couverture (2) d'un matériau au moins partiellement poreux avec au moins une région de bord (3) et au moins une couche de fibres (4) d'un tissu fibreux, l'au moins une couche de couverture (2) formant une enveloppe (31) qui entoure la couche de fibres (4), de sorte que la couche de fibres (4) est agencée de façon imperdable à l'intérieur de l'au moins une couche de couverture (2), **caractérisé en ce que** l'au moins une couche de couverture (2) est une feuille métallique ayant une épaisseur (5) plus petite que 0,04 mm, notamment plus petite que 0,03 mm ou même plus petite que 0,02 mm.

2. Filtre composite (1) selon la revendication 1, dans lequel l'enveloppe (31) est formée d'une couche de couverture (2), **caractérisé en ce que** la couche de couverture (2) a au moins une région de bord (3) et une région de déformation (32) opposée, la couche de couverture (2) étant reliée à elle-même par technique de jointoiement dans l'au moins une région de bord (3).

3. Filtre composite (1) selon la revendication 1, dans lequel au moins deux couches de couverture (2) forment l'enveloppe (31), **caractérisé en ce que** les couches de couverture (2) sont reliées les unes aux autres par technique de jointoiement dans au moins une région de bord (3), et la couche de fibres (4) est agencée de façon imperdable entre ces couches de couverture (2) étant reliées les unes aux autres.

4. Filtre composite (1) selon l'une des revendications 1 à 3, **caractérisé en ce qu'**au moins une couche de couverture (2) a dans au moins une région de bord (3) une porosité réduite par rapport à la région résiduelle, n'y a notamment pas de porosité.

5. Filtre composite (1) selon l'une des revendications précédentes, **caractérisé en ce que** celui-ci a une porosité moyenne plus grande que 70 %, notamment plus grande que 90 %.

6. Filtre composite (1) selon l'une des revendications 2 à 5, **caractérisé en ce que** l'au moins une région de bord (3) s'étend depuis une arête (6) de la couche de couverture (2) sur une largeur de bord (7) qui comporte entre 3 mm et 15 mm, la région de bord (3) étant agencée de préférence sur au moins deux arêtes (6) opposées.

7. Filtre composite (1) selon l'une des revendications précédentes, **caractérisé en ce que** la liaison par technique de jointoiement est effectuée à l'aide d'un agent à braser (8).

8. Filtre composite (1) selon l'une des revendications précédentes, **caractérisé en ce que** la couche de fibres (4) a une première longueur (9) et une première largeur (10), et l'au moins une couche de couverture (2) a une deuxième longueur (11) et une deuxième largeur (12), la première longueur (9) et/ou la première largeur (10) étant plus petite(s) que la deuxième longueur (11) et/ou la deuxième largeur (12).

9. Filtre composite (1) selon l'une des revendications précédentes, **caractérisé en ce que** la couche de fibres (4) a une étendue (13) de 0,01 mm à 1 mm.

10. Filtre composite (1) selon l'une des revendications précédentes, **caractérisé en ce qu'**au moins une couche de couverture (2) a au moins une surface de guidage de flux (15).

11. Corps de filtre (16) pour purifier un flux de gaz d'échappement d'une machine à combustion interne (17), **caractérisé en ce qu'**au moins un filtre composite (1) selon l'une des revendications 1 à 10 est agencé au moins partiellement de manière telle dans un boîtier (18) que des canaux (19) sont formés, notamment selon une structure en nids d'abeilles, les canaux (19) étant de préférence au moins partiellement étranglés.

12. Corps de filtre (16) selon la revendication 11, **caractérisé en ce qu'**au moins une couche de couverture (2) a au moins partiellement une structure (21) qui délimite sensiblement les canaux (19)

13. Procédé destiné à la fabrication d'un filtre composite (1) selon l'une des revendications 1 à 10, comportant les étapes suivantes :
- introduire une porosité dans au moins une couche de couverture (2), au moins une région de bord (3) étant évitée,
- agencer une couche de fibres (4) sur une couche de couverture (2),
- réaliser une enveloppe (31) avec l'au moins une couche de couverture (2), et
- réaliser une liaison par technique de jointoiement dans l'au moins une région de bord (3), de sorte que la couche de fibres (4) est fixée de manière imperdable entre l'au moins une couche de couverture (2).

14. Procédé selon la revendication 13, dans lequel la réalisation d'une enveloppe (31) est effectuée par la déformation d'une couche de couverture (2), notamment au moyen de courbure, de flexion ou de pliage de la couche de couverture (2) dans une région de déformation (32).

15. Procédé selon la revendication 13, dans lequel la formation d'une enveloppe (31) est effectuée au moyen de deux couches de couverture (2), dans quel cas l'au moins une couche de fibres (4) est agencée de manière telle entre les couches de couverture (2) que les régions de bord des couches de couverture (2) se recouvrent directement au moins partiellement.

16. Procédé selon l'une des revendications 13 à 15, dans lequel avant l'agencement de la couche de fibres (4) sur la couche de couverture (2) une structure (21) est introduite dans au moins une couche de couverture (2).

17. Procédé selon la revendication 16, dans lequel deux couches de couverture (2) sont utilisées pour former une enveloppe (31) et dans lequel l'introduction de la structure (21) dans les deux couches de couverture (2) est exécutée temporellement de manière successive et une autre structure (21) est générée respectivement.

18. Procédé selon l'une des revendications 13 à 17, dans lequel la liaison par technique de jointoiement est effectuée par une opération de soudage.

19. Procédé selon l'une des revendications 13 à 17, dans lequel la liaison par technique de jointoiement est effectuée par une opération de brasage.

20. Procédé selon la revendication 19, dans lequel au moins une couche de couverture (2) est dotée d'un stop de brasage (23) à l'extérieur de l'au moins une région de bord (3).
